Europäisches Patentamt

European Patent Office

Office européen des brevets

(19)

(11) Publication number:

**0 130 575**
**A1**

(12) # EUROPEAN PATENT APPLICATION

(21) Application number: 84107480.0

(22) Date of filing: 28.06.84

(51) Int. Cl.⁴: **H 01 B 1/08**

(30) Priority: 01.07.83 JP 120638/83

(43) Date of publication of application: 09.01.85
Bulletin 85/2

(84) Designated Contracting States: **BE CH DE FR GB IT LI
NL SE**

(71) Applicant: **KANEGAFUCHI KAGAKU KOGYO
KABUSHIKI KAISHA, 2-4 Nakanoshima 3-chome, Kita-ku
Osaka-shi (JP)**

(72) Inventor: **Nanao, Tsutomo Nanseidai Mansion Shinkan,
202, 124-43, Nakayamatedori 7-chome Chuo-ku,
Kobe-shi Hyogo-ken (JP)**
Inventor: **Eguchi, Tamiyuki, 2-31, Yoshida-cho 1-chome
Hyogo-ku, Kobe-shi Hyogo-ken (JP)**

(74) Representative: **Türk, Dietmar, Dr. rer. nat. et al, Redies,
Redies, Türk & Gille Patentanwäite Brucknerstrasse 20,
D-4000 Düsseldorf 13 (DE)**

(54) Electrically conductive fiber.

(57) An electrically conductive fiber comprising a substrate having a shape of fiber or plate on which an electrically conductive inorganic oxide thin film having a thickness of not more than 3 μm is formed. The conductive fiber is useful as a filler for a conductive resin composition or a conductive coating having a desired color.

EP 0 130 575 A1

ELECTRICALLY CONDUCTIVE FIBER

The present invention relates to an electrically conductive fiber. The conductive fiber can provide a conductive coating, a conductive resin composition molded article which is superior in transparency and whiteness.

For protecting electronic devices such as an integrated circuit (IC) and a large scale integrated circuit (LSI) from breakage of the circuit by an electrostatic shock and from malfunction by a noise or an electrical shock, an article having an antistatic property and/or an electric wave sheilding effect is provided around the electronic device. The sheilding article must be made of a conductive material, and has hetherto been prepared (1) by using a resin composition containing a surfactant such as a quaternary ammonium salt to give an ionically electric conductivity to a surface of an article, (2) by using a conductive resin containing a conductive carbon such as acetyléne black or Ketjenblack, or a powder, a fiber or a flake of a metal such as aluminium or nickel, and (3) by forming a metal layer on an article by a vaccum evaporation method or a metal spraying method. The "electric conductivity" as used herein means a property that a volume resistivity is not more than about $10^9 \Omega \cdot cm$.

However, the conventional processes have the following defects. Namely, in the process (1) the conductivity can be obtained only when the article is used in an atmosphere containing high moisture because the conductivity is developed by moisture in its atmosphere, and also there is a danger of pollution due to bleeding of the surfactant. In the process (2), a color of the article prepared is black or charcoal gray because of the use of the colored filler, which makes the

- 2 -

appearance bad and the commercial value reduce. Although the process (3) does not have the above-mentioned defects, the process requries an expensive additional step for forming a metal layer, which makes the cost of the article more expensive.

When an electrically conductive article for sheilding electric wave is prepared from a resin composition containing conductive fibers, the fibers form a network structure in the article. Therefore, the conductivity of the article can be obtained by using a small amount of the conductive fiber and also a reinforcing effect can be obtained. Such effects cannot be obtained by using conductive particles. As the conductive fiber, there are known a carbon fiber, a stainless steel fiber, a glass fiber coaded with aluminium and a glass fiber coated with silver. However, all of the known conductive fibers are expensive, which makes the cost of the resulting article remarkably expensive.

An object of the present invention is to provide a nonexpensive electrically conductive fiber having a shape of fiber or plate.

Another object of the present invention is to provide an electrically conductive fiber which is superior in transparency or whiteness.

According to the present invention there is provided an electrically conductive fiber comprising a substrate having a shape of fiber or plate on which an electrically conductive inorganic oxide thin film having a thickness of not more than 3 $\mu$m is formed.

The conductive fiber of the present invention is useful as a filler for a conductive resin composition and a conductive coating having a desired color. Particularly when a glass fiber is used as the substrate, a transparent or white molded article or coating can be obtained.

The conductive fiber of the present invention has the conductive inorganic oxide thin film on the

- 3 -

surface of the substrate. The thickness of the thin film is not more than 3 μm, preferably not more than 1 μm. For obtaining a high transparency, the thickness of the thin film is preferably not more than 0.5 μm. It is hard to prepare a conductive film of more than 3 μm in thickness which has a uniform thickness at every portion on the substrate. The unevenness of the thickness makes the conductivity decreased, and also the transparency lowered. The minimum thickness of the thin film is not particularly restricted, but is desirebly 0.01 μm. When the thickness of the film is less than 0.01 μm, the film is inferior in conductivity.

Typical examples of the conductive inorganic oxides (hereinafter referred to as "conductive materials") are, for instance, metal oxides such as indium oxide doped with tin, tin oxide doped with antimony, partially oxidized titanium, cadmium tin oxide, fluorized tin oxide, fluorized tin oxide doped with antimony, zinc oxide, zinc oxide doped with aluminium, barium lead oxide and barium bismuth lead oxide. Preferable conductive materials are indium oxide doped with tin, tin oxide doped with antimony and zinc oxide doped with aluminium. It should be noted that the conductive material alone can hardly be made in a form of fiber and is inferior in strength.

As the substrate, there may be employed a glass fiber, a ceramic fiber, a heat stable synthetic resin fiber, and the like. Examples of the glass fibers are, for instance, an alkali glass fiber, an alkalifree glass fiber, a silicate glass fiber, and the like. Examples of the ceramic fibers are, for instance, a silica alumina fiber, an alumina fiber, an asbestos fiber, a wollastonite fiber, a potassium titanate fiber, a calcium silicate fiber, and the like. Examples of the synthetic resin fibers are, for instance, a polyamide fiber, a polyimide fiber, a polyester fiber, and the like. The ratio of the length $\ell$ to the breadth or the thickness $\underline{d}$, i.e. $\ell/d$, of the fiber is preferably not less than 6, particularly preferably not less than 20. The diameter and the length of the fiber is preferably not less than 1 μm and not less than 6 μm, respectively. A substrate having a shape of plate such as mica or talc may be also employed.

The conductive fiber of the present invention can be preferably prepared by applying a solution of one or more organometal compounds containing an electrically conductive metal component to the substrate, and thermally decomposing the organometal compounds. It is hardly to prepare the conductive fiber of the present invention by a vacuum evaporation method or a sputtering method, because it is difficult to form a uniform thin film of the conductive material, the required equipments are expensive, the productivity is bad, and thus the cost for production is increased.

As the organometal compound containing the conductive metal component, there can be employed a metal alkoxide, a metal chelate, a metal salt of a carboxylic acid, a reaction product thereof, a mixture thereof, and the like.

Examples of the metal alkoxide are, for instance, metal alkoxides having single component, partial metal alkoxides and compound metal alkoxides represented by the formulas: $M(OR^1)_n$, $M(OR^2)_a(OR^3)_b$, $M(X)_a(OR^1)_b$ and $M[N(OR^1)_m]_n$, and oligomers thereof. In the formulas, M and N are the same or different metals, and each is barium, titanium, zinc, cadomium, aluminium, indium, tin, lead, antimony, bismuth, or the like. $R^1$, $R^2$ and $R^3$ are the same or different, and each is a functional group. The preferable functional organic group is an alkyl group, an aryl group, an alkenyl group, an aralkyl group, or a hydroxylated derivative or a halogenated derivative thereof having 1 to 20 carbon atoms, particularly 1 to 8 carbon atoms. Also in the formulas, and also $n$ and $m$ represent a positive integer, and $a$ and $b$ represent positive integers and the sum of $a$ and $b$ is the valency of the metal M. $X$ represents oxygen atom, nitrogen atom, a halogen atom or an organic functional group such as a carboxylic acid residue or a diketone residue having 1 to 20 carbon atoms.

A typical compound which reacts with the metal M to form the metal alkoxide is a monohydric or polyhydric alcohol having at least one alcoholic hydroxyl group represented by the formula HOR, wherein R is $R^1$, $R^2$ or $R^3$ as defined above. Preferable examples of the alcohols are, for instance, methyl alcohol, ethyl alcohol, n-propyl alcohol, isopropyl alcohol, n-butyl alcohol, isobutyl alcohol, pentyl alcohol, hexyl alcohol, 2-ethylhexyl alcohol, octyl alcohol, tert-butyl alcohol, lauryl alcohol, 1,4 - butanediol, glycerol, ethylene glycol, octylene glycol, ethylene glycol monoalkyl ether, and the like.

As the metal chelate, there can be employed a metal chelate prepared from the above-mentioned metal and a compound such as EDTA (ethylenediaminetetraacetic acid), NTA (nitrilotriacetic acid), UDA (uramil diacetic acid), glycine, dimethylglyoxime, oxine, dithizone, methyl acetoacetate, ethyl acetoacetate and β-diketone, most preferably acetylacetone.

As the metal salt of the carboxylic acid, there can be employed a metal salt of the carboxylic acid having one or more carboxyl groups and may be saturated or unsaturated. Examples of the monocarboxylic acids are, for instance, acetic acid, linoleic acid, oleic acid, lenoic acid, octylic acid, and the like, and examples of the citraconic acid, maleic acid, phthalic acid, naphathanic acid, and the like. Particularly, acetic acid, oleic acid, octylic acid and naphtanic acid are preferably employed.

When the metal solution is prepared, the ratio of the metals in the orgamometal compounds to be dissolved can be adjusted by selecting the mixing amounts of the organometal compounds so that the thin film obtained by the thermal decomposition is electrically conductive. Also there may be employed a reaction product of the metal alkoxide and the metal chelate or a reaction product of the metal alkoxide and the metal salt of the carboxylic acid.

Furthermore, the metal solution can be prepared by reacting an organic chelating agent with two or more kinds of metal alkoxides.

When two or more kinds of metal alkoxides are employed, the metal solution obtained is inferior in stability and the ratio of the metals in the thin film obtained by the thermal decomposition are not uniform, because the hydrolyzing abilities and the stabilities of the metal alkoxides are different. In such case, the addition of the chelating agent can solve the above defects.

Examples of the chelating agents are, for instace, EDTA, NTA, UDA, dimethylglyoxime, dithizone, oxine, glycine, methyl acetoacetate, ethyl acetoacetate, β-diketone, monocarboxylic acid, poly-carboxylic acid, and the like. Preferably, methyl acetoacetate, ethyl acetoacetate, β-diketone, monocarboxylic acid such as linoleic acid, oleic acid or octylic acid, and polycarboxylic acid such as oxalic acid, citraconic acid, maleic acid, phthalic acid or naphthanic acid are employed. The amount of the chelating agent is 0.01 to 4 moles, preferably 0.05 to 1.0 mole to one alkoxy group of the metal alkoxide. Particularly, when the chelating agent is added to the metal alkoxides so that the number of the alkoxy groups capable of being hydrolyzed to one metal atom is not less than 0.5, preferably not less than 1, the metal solution obtained is extremely increased in application property to the glass fiber and/or the ceramic fiber.

Examples of the solvents which dissolve the organometal compound are, for instance, a monohydric alcohol such as ethyl alcohol, n-propyl alcohol, isopropyl alcohol, n-butyl alcohol, tert-butyl alcohol; a polyhydric alcohol such as glycerol, ethylene glycol, ethylene glycol monoalkyl ether; a carboxylic acid ester such as ethyl acetate, isopropyl acetate, butyl acetate, ethyl n-butyrate, isoamyl formate; an ether such as dioxane or tetrahydrofuran; a ketone such as acetone, methyl ethyl ketone, acetylacetone, diethyl ketone; an aliphatic hydrocarbon such as n-pentane, n-hexane; an aromatic hydrocarbon such as benzene, toluene or xylene; a nitrogen-containing organic solvent such as N-methyl-2-pyrrolidone, dimethylformamide, dimethylacetamide or pyridine; and a mixture thereof. Among them the monohydric lower alcohol, the polyhydric lower alcohol, the carboxylic acid lower alkyl ester, the ether and the nitrogen-containing organic solvent can be widely used. However, the solvent to be practically used should be selected depending on the combination of the organometal compounds.

Even if the organometal compounds are not or hardly dissolved in the organic solvent, it is possible to dissovle them uniformly by adding an aldehyde and, if necessary, heating the mixture. The heat treatment is preferably carried out at a temperature of not more than the refluxing temperature of the solvent. The above effect is remarkable when the chelating agent is the $\beta$-diketone. Furthermore, the addition of the aldehyde can inhibit the sublimation of the metal complex.

The preferable aldehydes are aldehydes having 1 to 8 carbon atoms. Typical examples of the aldehydes are, for instance, formaldehyde, paraformaldehyde, acetaldehyde, benzaldehyde, and the like.

The amount of the aldehyde is in general not less than 0.001 mole, usually 0.1 to 10 moles on the basis of 1 atom of the organometal compounds used.

In addition, additives other than the solvent may be added to the solution. Examples of the additives are, for instance, an organic acid for accelerating the thermal decomposition, an antioxidant for improving the pot life, a viscosity controller for controlling the thickness, and the like.

The conductive fiber of the present invention

- 8 -

can be prepared by applying the organometal solution to the substrate, drying and thermally decomposing, or by applying the organometal solution to the substrate which is previously heated. The organometal compound is preferably hydrolyzed before being decomposed. The decomposing temperature is preferably not less than $300^\circ C$. If desired, a baking treatment may be carried out after the decomposing treatment. The organometal solution may be applied to the substrate, for instance, in a form of mist with a spray or by immersing the substrate in the organometal solution.

The baking conditions should be selected according to the desired composition of the conductive thin film. In general, the baking treatment is carried out at a temperature of not less than $300^\circ C$ in an oxidizing atmosphere, an insert gas or a reducing atmosphere.

The concentration of the organometal compound in the solution is adjusted according to the application method employed. A good thin film can be usually obtained when the metal content is adjusted to 0.01 to 20 % (% by weight, hereinafter the same), preferably 0.5 to 10 %. When the concentration of the organometal compound is within the above range, the thin film is not hazed because the metal compound obtained by the thermal decomposition is hardly to form particles. In order to improve the adhesive property of the film, the steps of the application and the decomposition are repeated by using the organometal solution of a low concentration.

Usually, the conductivity of the conductive material is remarkably reduced when the conductive material includes a harmful ion such as an alkali metal ion. In such a case, the substrate is previously treated with a solution of a polymer of silicon tetraethoxide to form a $SiO_2$ film on the substrate.

In addition, in order to improve the conductivity, the conductive fiber of the present invention may be coated with a metal film by means of an electroplating method. Examples of the metals used in the electroplating method are, for instance, gold, silver, zinc, tin, nickel, cupper, chromium, iron, and the like.

Although the conductive fiber can be molded alone or with a small amount of an inorganic or an organic binder, the molded article obtained is inferior in strength and shaping. Therefore, the conductive fiber of the present invention is useful as a filler for a resin composition. Examples of the resins are, for instance, unsaturated polyester, polycarbonate, polyethylene terephthalate, polybutylene terephthalate, polyamide, ABS resin, MBS resin, polyvinyl chloride, polystyrene, polypropylene, silicone rubber, low molecular polyethylene glycol, and the like. From viewpoints of molding property and strength, the amount of the conductive fiber is preferably 1 to 80 parts (part by weight, hereinafter the same), particularly 5 to 70 parts to 100 parts of the polymer.

The present invention is more particularly described and explained by means of the following Examples. It is to be understood that the present invention is not limited to the Examples and various changes and modifications may be made in the invention without departing from the sprit and scope thereof.

## Example 1

In 100 g of dry isopropyl alcohol were dissolved 17.73 g tin tetraisopropoxide and 0.75 g of antimony tripropoxide so that the atomic ratio of Sn:Sb was 1:0.05, and then 2.0 g of acetylacetone and 1.0 g of paraformaldehyde were added thereto. The mixture obtained was refluxed for 30 minutes to give a uniform solution for preparing a transparent conductive tin oxide thin film.

The solution was applied to glass fibers of an E glass for electric insulation having a diameter of about 20 μm by dip-coating at a withdrawing speed of about 7 cm/min, and then dried.  The coated glass fibers were heated in an electric furnace at 500°C for about 15 minutes to give bluish transparent conductive glass fibers.

The electric resistance of the conductive glass fiber at 1 cm length was 16 K$\Omega$, which proves that the glass fiber was electrically conductive.  As a result of an analysis with a scanning type electron microscope, the conductive glass fiber had a uniform thin film of about 800 A in thickness, which was made of tin oxide containing Sn and Sb at an atomic ratio of 1:0.05

The conductive glass fibers were chopped to a length of about 5 mm.  Twenty grams of the chopped fibers were blended with 7 g of an epoxy resin (Epikote 828 available from Shell Chemicals Corporation) and 7 g of a curing agent (Tomaid  210 available from Fuji Kasei Kabushiki Kaisha), and mixed sufficiently.  After defoaming under reduced pressure, the resin composition was molded to prepare an article of about 15 mm x 30 mm x 30 mm in size.  The volume resistivity of the article was 4.8 x 10$^7\Omega$·cm, which proves that the article had an antistatic property.

## Example 2

The procedures in Example 1 were repeated except that biotite of 40 mm in diameter and 0.1 mm in thickness was employed instead of the glass fiber to give a conductive fiber having a tin oxide film.  The surface resistance of the conductive fiber was 2K$\Omega$/□.

## Comparative Example

The procedures in Example 1 were repeated except that the glass fibers having no conductive film thereon were employed to give a molded article.  The volume resistivity of the article was 4.7 x 10$^{13}\Omega$·cm, which proves that the article was an electric insulator.

0130575

- 11 -

WHAT WE CLAIM IS

1. An electrically conductive fiber comprising a substrate having a shape of fiber or plate on which an electrically conductive inorganic oxide thin film having a thickness of not more than 3 $\mu$m is formed.

0130575

## DOCUMENTS CONSIDERED TO BE RELEVANT

EP 84107480.0

| Category | Citation of document with indication, where appropriate, of relevant passages | Relevant to claim | CLASSIFICATION OF THE APPLICATION (Int. Cl. ³) |
|---|---|---|---|
| X | GB - A - 1 405 658 (TEIJIN)  * Claims 1,4,17; page 3, lines 73-87 * | 1 | H 01 B 1/08 |
| X | US - A - 4 345 000 (KAWAZOE et al.)  * Abstract; claims; column 8, lines 24-31 * | 1 | |
| X | EP - A1 - 0 025 583 (MITSUBISHI KINZOKU)  * Claims 1-6 * | 1 | |

|  | TECHNICAL FIELDS SEARCHED (Int. Cl. ³) |
|---|---|
|  | H 01 B 1/00 |

The present search report has been drawn up for all claims

| Place of search | Date of completion of the search | Examiner |
|---|---|---|
| VIENNA | 10-08-1984 | KUTZELNIGG |